# EUROPÄISCHE PATENTSCHRIFT

(11) **EP 2 981 707 B1**
(45) Veröffentlichungstag und Bekanntmachung des Hinweises auf die Patenterteilung: **15.02.2017**
(21) Anmeldenummer: 14711797.2
(22) Anmeldetag: 24.03.2014
(51) Int. Cl.: F03B 13/26

(54) **ROBOTER FÜR WINDKRAFTANLAGE MIT EIN ANTRIEB**
ROBOT FOR WIND POWER PLANT WITH A DRIVE
ROBOT POUR ÉOLIENNE COMPRENANT UN SYSTÈME D'ENTRAÎNEMENT

(30) Priorität: 25.03.2013 DE 102013005030
(43) Veröffentlichungstag der Anmeldung: 10.02.2016
(73) Patentinhaber: Voith Patent GmbH, 89522 Heidenheim (DE)
(72) Erfinder: SOMMERKORN, Klaus, 89518 Heidenheim (DE)
(74) Vertreter: Dr. Weitzel & Partner
(86) Internationale Anmeldenummer: PCT/EP2014/055851
(87) Internationale Veröffentlichungsnummer: WO 2014/154638

(56) Entgegenhaltungen:
- WO-A2-03/048569
- KR-A- 20130 025 472
- US-A1- 2013 017 086

## Beschreibung

Die Erfindung betrifft ein Strömungskraftwerk gemäß dem Oberbegriff von Anspruch 1.

Strömungskraftwerke sind bekannt. Sie können in Form von freistehenden Einheiten mit rotorförmigen Wasserturbinen zur Energiegewinnung aus einem Fließgewässer oder einer Meeresströmung, insbesondere einer Gezeitenströmung, ausgebildet sein. Derartige Strömungskraftwerke können aber auch als Onshore- oder Offshore-Windkraftanlagen ausgebildet sein. Auf DE 10 2013 001 212 wird verwiesen.

Typischerweise sind derartige Strömungskraftwerke vollständig tauchende Anlagen, sodass die wenigstens eine Turbineneinheit des Strömungskraftwerks in dessen Betrieb vollständig unter Wasser angeordnet ist. Die Turbineneinheit ist dabei von einer Gründungsstruktur getragen. Derartige Gründungsstrukturen sind üblicherweise Schwerkraftfundamente oder Fundamente aus Stahlkonstruktionen wie zum Beispiel Dreibeine oder Pfahl- oder Pfostenbauten. In der Regel sind solche Gründungsstrukturen zur Turbineneinheit hin pfostenartig ausgeführt. Der Querschnitt dieser muss dabei nicht notwendigermaßen rund sein, denn auch ein ovaler oder linienförmiger Querschnitt ist denkbar. Die vorliegende Erfindung betrifft derartige gattungsgemäße Strömungskraftwerke.

Die Gründungsstruktur nimmt dabei Kräfte und Momente auf, die durch die Anströmung des Strömungskraftwerks entstehen. Sie leitet diese in das umgebende Erdreich, beispielsweise den Gewässergrund, weiter.

Gründungsstrukturen können beispielweise einen Stützpfeiler umfassen, der mit einem Fundament am Gewässergrund verbunden ist. Herkömmlich wird dabei der Stützpfeiler sich zur Turbineneinheit hin verjüngt ausgeführt. Dadurch wird eine Strömungsbeeinflussung des als Strömungswiderstand wirkenden verjüngten Querschnitts des Stützpfeilers vermindert. Dies wirkt sich auch positiv auf den Wirkungsgrad eines solchen Strömungskraftwerks aus. Die schlanke Ausführung des Stützpfeilers im Bereich der Anbindung an die Turbine hat jedoch den Nachteil, dass insbesondere in dessen unterem Teil eine kritische Stelle der Festigkeit vorliegt. An dieser kann oftmals ein Grenzwert für die maximale oder schwellende Last der Materialspannung des Stützpfeilers erreichen, welcher dem Maximalwert für die erwartete Lebensdauer des Stützpfeilers entspricht. Damit ist eine weitere Reduktion des Querschnitts des Stützpfeilers technisch nicht mehr möglich.

Die Stahlkonstruktionen der Gründungsstruktur sind dem Meerwasser ständig ausgesetzt. Meerwasser ist bekanntlich aggressiv und bewirkt einen starken Alterungsprozess der Strukturen. Auch findet im Laufe der Zeit ein starker maritimer Bewuchs durch Algen, Muscheln und so weiter statt, der ebenfalls die Dauerfestigkeit der Strukturen beeinträchtigt.

Es werden bereits Inspektionsroboter eingesetzt, die die Aufgabe haben, den Zustand der Strukturen zu erfassen, und auch gegebenenfalls Reparatur- und Servicearbeiten durchzuführen. Bei den genannten Inspektionsrobotern handelt es sich um Geräte, die entlang der Strukturen fahren oder gleiten. Sie werden im Allgemeinen durch magnetische Mittel bei ihrem Fahren oder Gleiten an den Strukturen festgehalten. Sie weisen einen Elektromotor oder einen Hydraulikmotor auf und benötigen daher zu ihrem Antrieb der Zufuhr elektrischer Energie. Diese wird von einem Versorgungsschiff über ein Kabel zugeführt. Da sich das Versorgungsschiff nur während einer begrenzten Zeitspanne im Bereich des Strömungskraftwerkes und damit der Gründungsstruktur aufhalten kann, lässt sich der Inspektionsroboter nur während einer entsprechend begrenzten Zeitspanne betreiben. Dies bedeutet, dass das Versorgungsschiff in Zeitabständen immer wieder zum Strömungskraftwerk zurückkehren muss, was aufwändig ist. Nachteilig ist hierbei auch, dass das Versorgungskabel am Inspektionsroboter immer wieder neu angeschlossen oder der Inspektionsroboter ausgebaut beziehungsweise von diesem abgekoppelt werden muss, was äußerst aufwändig ist.

US 2013/0017086 A1 und WO2012158042 beschreiben ein Windkraftwerk mit einem Generator. Die Turbine treibt den Generator an, der Strom aus Windenergie erzeugt. Die Gondel ruht auf einem Turm. Ein Inspektionsroboter ist an der Gondel aufgehängt und entlang dem Turm aufwärts und abwärts verfahrbar, um im Stillstand des Rotors der Turbine die Rotorblätter zu untersuchen. Der Roboter erhält elektrische Energie über ein Kabel vom Generator. Dies ist nachteilig, wenn die Orientierung der Gondel verändert wird, beispielsweise durch Änderungen der Strömungsrichtung.

Der Erfindung liegt die Aufgabe zugrunde, ein Strömungskraftwerk gemäß dem Oberbegriff von Anspruch 1 derart zu gestalten, dass ein ständiges Heranfahren eines Versorgungsschiffes sowie ein häufiges An- und Abkoppeln des Versorgungskabels für den Inspektionsroboter überflüssig ist, und dass auch kein Stromversorgungskabel zwischen Gondel und Roboter notwendig ist.

Diese Aufgabe wird durch die Merkmale von Anspruch 1 gelöst.

Die Erfindung betrifft nicht ein Windkraftwerk, sondern ein tauchendes Strömungskraftwerk für einen Offshore-Energieerzeuger. Das Strömungskraftwerk umfasst in bekannter Weise eine Energieeinheit mit einer Turbine sowie einem von dieser angetriebenen Generator, eine Tragstruktur zum Tragen der Energieeinheit sowie einen Roboter zum Inspizieren und/oder Bearbeiten von Teilen des Strömungskraftwerkes.

Gemäß der Erfindung ist ein Roboter vorgesehen, der autark und ortsunabhängig entlang des gesamten Strömungskraftwerkes bewegbar ist, und der als Antrieb eine Hilfsturbine aufweist, die von der Strömung antreibbar ist. Da im Offshore-Betrieb stets eine Strömung herrscht, wird die Turbine von der Strömung stets angetrieben und treibt daher auch ständig den Roboter selbst an. Dies kann mittelbar oder unmittelbar geschehen. Die Hilfsturbine kann somit unmittelbar an den Roboter angeschlossen sein und mit diesem in einer mechanischen Triebverbindung stehen. Der Roboter ist dabei unabhängig vom gesamten Strömungskraftwerk. Er kann an diesem entlang laufen. Dabei kann er mittels eines Rollen- oder Kettentriebes die gesamte Kontur des Strömungskraftwerkes ablaufen. Hierbei kann er durch Magnetkraft ständig in berührender Verbindung mit dem Strömungskraftwerk bleiben, beispielsweise mit dessen Tragstruktur. Diese ständige berührende Verbindung kann auch formschlüssig hergestellt werden, beispielsweise dadurch, dass die maßgeblichen Teile, die inspiziert oder bearbeitet werden sollen, eine Schiene aufweisen, die das gesamte Tragwerk überzieht, und der Roboter kann mittels einer Gleitklaue oder einer Rolle in die Schiene eingreifen.

Auch ist es denkbar, den Roboter ohne jegliche Berührung an den Außenflächen des Strömungskraftwerkes entlang zu führen. Hierzu wird man einen Sensor verwenden, der dem Roboter zugeordnet ist. Dieser erzeugt ein Abstandssignal. Die Hilfsturbine beziehungsweise zwei oder mehrere Hilfsturbinen werden aufgrund des Abstandssignals von einem Steuergerät stets auf den gewünschten Abstand zur Oberfläche des Strömungskraftwerkes gehalten, beispielsweise zur Oberfläche der Tragstruktur.

Statt des unmittelbaren Übertragens von Drehmoment von der Turbine auf den Roboter ist auch eine mittelbare Übertragung denkbar. So kann beispielsweise der Hilfsturbine ein Generator nachgeschaltet werden, und dem Generator ein Motor. Auch lässt sich in den Antriebsstrang eine Ladebatterie zwischenschalten.

Die Hilfsturbine beziehungsweise die Hilfsturbinen sind derart zu gestalten, dass sie sich automatisch in eine angeströmte Position drehen, sodass ständig Energie für den Bedarf des Roboters erzeugt wird.

Alternativ zu der genannten Lösung, bei welcher die Hilfsturbine unmittelbar am Rotor angreift, kann sie auch irgendwo an der Gründungsstruktur des Strömungskraftwerks montiert sein. Sie treibt einen ebenfalls ortsfesten Generator an. Der Generator ist über ein Stromkabel mit dem mobilen Roboter verbunden. Der Nachteil besteht darin, dass es eines Kabels bedarf. Jedoch ist dies eine Lösung, die gegenüber dem Stand der Technik Vorteile hat.

Eine weitere Lösung besteht im Folgenden:
Der Roboter ist entlang der Oberfläche des gesamten Strömungskraftwerkes frei beweglich. Irgendwo anders, vorzugsweise an irgendeiner Stelle der Tragkonstruktion, befindet sich eine ortsfeste Ladestation. Dieser ist ein Hilfsgenerator vorgeschaltet, und diesem wiederum eine Hilfsturbine. Der Rotor samt Motor und Ladebatterie fährt immer dann die Ladestation an, wenn die Ladung der Ladebatterie zu Ende geht. Diese Lösung hat den Vorteil, dass die verfahrbare Einheit, nämlich Roboter, Motor und Ladebatterie einen verhältnismäßig geringen baulichen Umfang und damit ein geringes Gewicht aufweisen. Auch die Versorgung der Ladestation aus dem Strömungskraftwerk ist denkbar.

Die Erfindung ist anhand der Zeichnung näher erläutert. Darin ist im Einzelnen folgendes dargestellt:
- Figur 1: zeigt im Aufriss einen Offshore-Energiepark mit zwei Strömungskraftwerken.
- Figur 2: veranschaulicht in schematischer Darstellung und im Aufriss ein Strömungskraftwerk ähnlich jener beiden gemäß Figur 1 mit einem Inspektions- und Arbeitsroboter sowie mit einer diesen versorgenden Hilfsturbine.
- Figur 3: veranschaulicht in schematischer Darstellung und im Aufriss ein weiteres Strömungskraftwerk ähnlich jenem gemäß Figur 2.

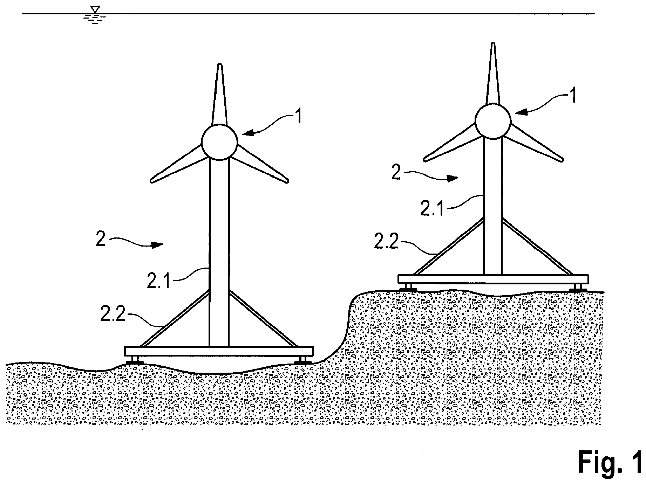

Der in Figur 1 gezeigte Offshore-Energiepark umfasst zwei Strömungskraftwerke gemäß der Erfindung. Die beiden Strömungskraftwerke sind baugleich. Sie umfassen jeweils eine Energieeinheit, umfassend eine Turbine 1 sowie einen Generator, der hier nicht gezeigt ist. Turbine und Generator befinden sich in einer torpedoförmigen Gondel.

Auf dem Meeresboden steht jeweils eine Tragkonstruktion 2. Sie kann im Meeresboden durch Einlassen von Pfählen verankert sein. Sie kann aber auch durch entsprechendes Eigengewicht mit dem Meeresboden genügend fest verbunden sein. Die Tragkonstruktion 2 umfasst einen Turm 2.1 sowie gegebenenfalls Stäbe 2.2.

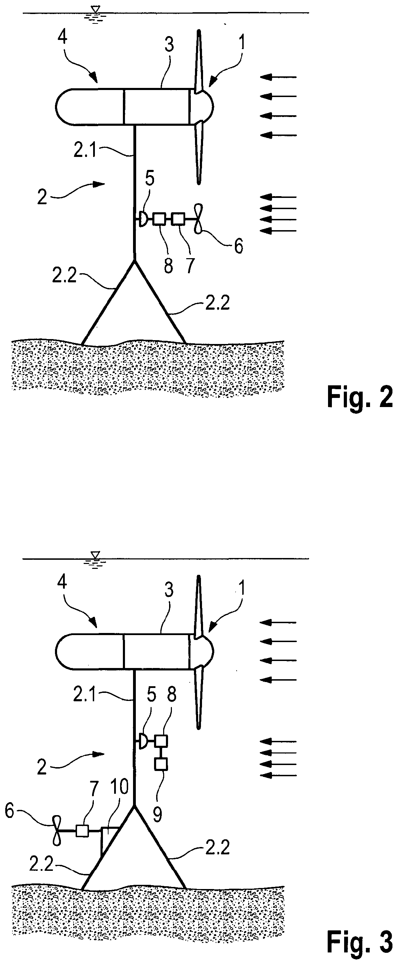

Die beiden Strömungskraftwerke umfassen eine Einheit mit einem Roboter, einem diesem vorgeschalteten Motor, einem dem Motor vorgeschalteten Hilfsgenerator sowie einer dem Hilfsgenerator vorgeschalteten Turbine. Diese Einheit kann an der Oberfläche des gesamten Strömungskraftwerkes frei laufen. Sie ist in Figur 1 nicht gezeigt, wohl aber in Figur 2.

Das in Figur 2 gezeigte Strömungskraftwerk umfasst eine torpedoförmige Gondel 3 mit einer Turbine 1 und einem mit dieser in Triebverbindung stehenden Generator 4. Die Gondel 3 ist auf einer Tragkonstruktion 2 gelagert, ähnlich wie bei Figur 1.

Entlang der Tragkonstruktion 2 wandert ein Inspektions- und Arbeitsroboter 5. Roboter 5 wird angetrieben von einer Hilfsturbine 6. Der Hilfsturbine ist ein Hilfsgenerator 7 nachgeschaltet, und dem Hilfsgenerator 7 ein Motor 8.

Der Inspektions- und Arbeitsroboter 5 ist durch Magnetkraft an der Tragkonstruktion 2 gehalten, aber durch einen Antrieb an dieser verfahrbar. Er weist einen Sensor auf, der die jeweilige Position des Inspektions- und Arbeitsroboters 5 erfasst, ferner eine zentrale Prozesseinheit (CPU), die Signale vom Sensor empfängt und in Abhängigkeit hiervon den Roboter auf seinem Wege entlang der Tragkonstruktion steuert.

Die Turbine der beiden Energieeinheiten wird angeströmt, im Meer durch Tiefenströmung, und in Flussläufen durch die Strömung des Flusses. Die Hilfsturbine 6 kann bezüglich Bauaufwand und erzeugter elektrischer Energie sehr klein sein.

Das in Figur 3 gezeigte Strömungskraftwerk ist etwas anders aufgebaut, als jenes gemäß Figur 2. Auch hier ist wiederum ein Inspektions- und Arbeitsrotor 5 vorgesehen, der entlang der gesamten Oberfläche des Strömungskraftwerkes wandern kann, von einem Motor 8 angetrieben. Motor 8 wird seinerseits bespeist mit Strom aus einer Ladebatterie 9.

Eine ortsfeste Ladestation 10 befindet sich an irgendeiner Stelle des Strömungskraftwerkes, beispielsweise an den Stäben 2.2. Der Ladestation 10 ist ein Hilfsgenerator 7 zugeordnet. Dieser wird von einer Hilfsturbine 6 angetrieben. Sobald der Ladezustand der Ladebatterie 9 sich im Laufe des Betriebes seinem Entladungszustand annähert, wandert Roboter 5 zur Ladestation 10, lädt sich auf und ist wieder einsatzbereit.

Der in Figur 3 veranschaulichte Gedanke erlaubt wiederum eine völlige Autarkie des gesamten Systems, die völlig ohne Kabel arbeitet und von der Außenwelt unabhängig ist. Die Lösung hat den weiteren Vorteil, dass die beweglichen Bauteile, somit Roboter 5, Motor 8 und Ladebatterie 9 einen relativ geringen Bauaufwand und damit auch ein relativ geringes Gewicht aufweisen.

Die mit der Hilfsturbine 6 erzeugte Energie kann auch für jegliche anderen Verbraucher als für den Inspektions- und Arbeitsroboter verwendet werden, beispielsweise als Signal- oder Steuerstrom.

Die Ladestation 10 kann auch ohne Hilfsturbine direkt aus dem Strömungskraftwerk erfolgen. Bei (völligem) Stillstand der Strömung und entsprechender Konstruktion des Roboters kann sich dieser auch vom Strömungskraftwerk entfernen, zum Beispiel um Inspektionsfotos von der Oberfläche zu machen.

Der Datenaustausch zum Kraftwerk kann durch Funk, Lichtsignal, Akustiksignal erfolgen, und zwar in Realzeit oder zeitversetzt. Im Roboter findet eine Zwischenspeicherung der Daten statt.

### Bezugszeichenliste

- 1: Turbine
- 2: Tragkonstruktion
- 2.1: Turm
- 2.2: Stäbe
- 3: Gondel
- 4: Generator
- 5: Inspektions- und Arbeitsroboter
- 6: Hilfsturbine
- 7: Hilfsgenerator
- 8: Motor
- 9: Ladebatterie
- 10: Ladestation

## Patentansprüche

1. Tauchendes Strömungskraftwerk für einen Offshore-Energieerzeuger, umfassend die folgenden Merkmale:
1.1 eine Energieeinheit mit einer Turbine (1) sowie einem mit dieser in Triebverbindung stehenden Generator (4);
1.2 eine Tragstruktur (2) zum Tragen der Energieeinheit (1, 4);
1.3 einen Inspektions- oder Arbeitsroboter (5) zum Inspizieren oder Bearbeiten von Teilen des Strömungskraftwerkes;
1.4 der Roboter (5) umfasst ein Antrieb
**gekennzeichnet durch** die folgenden Merkmale:
1.5 der Antrieb umfasst eine Hilfsturbine (6), mit einem Hilfsgenerator (7), die von der Strömung antreibbar
ist, sodass ständig Energie für den Bedarf des Roboters erzeugt wird.

2. Strömungskraftwerk nach Anspruch 1, **dadurch gekennzeichnet, dass** im Antriebsstrang zwischen Hilfsturbine (6) und Roboter (5) ein Hilfsgenerator (7) sowie ein Motor (8) angeordnet sind.

3. Strömungskraftwerk nach Anspruch 2, **dadurch gekennzeichnet, dass** zwischen Hilfsgenerator (7) und Motor (8) eine Ladebatterie (10) geschaltet ist.

4. Strömungskraftwerk nach einem der Ansprüche 1 bis 3, **dadurch gekennzeichnet, dass** der Roboter (5) durch Kraft- oder Formschluss an der Tragkonstruktion (2) oder anderen Bauteilen gehalten ist.

5. Strömungskraftwerk nach einem der Ansprüche 1 bis 4, **dadurch gekennzeichnet, dass** sich die Hilfsturbine (6) zusammen mit dem Roboter (5) bewegt.

6. Strömungskraftwerk nach einem der Ansprüche 2 bis 4, **dadurch gekennzeichnet, dass** eine Ladestation (10) ortsfest angeordnet ist, und dass der Ladestation (10) eine Hilfsturbine (6) sowie ein Generator (7) vorgeschaltet sind.

7. Strömungskraftwerk nach einem der Ansprüche 1 bis 6, **dadurch gekennzeichnet, dass** Maßnahmen getroffen sind, um ein Entfernen des Roboters (5) von der Tragstruktur (2) zu ermöglichen.

## Claims

1. An immersed flow power plant for an offshore power generator, comprising the following features:
1.1 a power unit with a turbine (1) and a generator (4) which is in drive connection with said turbine;
1.2 a support structure (2) for supporting the power unit (1 4);
1.3 an inspection or working robot (5) for inspecting or treating parts of the flow power plant;
1.4 the robot (5) comprises a drive;
**characterized by** the following feature:
1.5 the drive comprises an auxiliary turbine (6) driven by the current with an auxiliary generator, in order, to continuously producing energy for the robot.

2. A flow power plant according to claim 1, **characterized in that** an auxiliary generator (7) and a motor (8) are arranged in the drive train between the auxiliary turbine (6) and the robot (5).

3. A flow power plant according to claim 2, **characterized in that** a rechargeable battery (10) is switched between the auxiliary generator (7) and the motor (8).

4. A flow power plant according to one of the claims 1 to 3, **characterized in that** the robot (5) is held by a frictionally engaged or interlocking connection on the support structure (2) or other components.

5. A flow power plant according to one of the claims 1 to 4, **characterized in that** the auxiliary turbine (6) moves together with the robot (5).

6. A flow power plant according to one of the claims 2 to 4, **characterized in that** a charging station (10) is arranged in a stationary manner, and the charging station (10) is provided in incoming circuit with an auxiliary turbine (6) and a generator (7).

7. A flow power plant according to one of the claims 1 to 6, **characterized in that** measures are taken in order to enable the removal of the robot (5) from the support structure (2).

## Revendications

1. Hydrolienne submersible pour une génératrice d'énergie offshore, comprenant les caractéristiques suivantes :
1.1 une unité de génération d'énergie avec une turbine (1) et un générateur (4) en liaison motrice avec celle-ci ;
1.2 une structure portante (2) destinée à porter l'unité de génération d'énergie (1, 4) ;
1.3 un robot d'inspection ou de travail (5) destiné à inspecter des parties de l'hydrolienne ou à travailler dessus ;
1.4 lequel robot (5) comprend un entraînement ;
**caractérisée en ce que**
1.5 l'entraînement comprend une turbine auxiliaire (6) avec un générateur auxiliaire (7), qui peut être entraînée par le courant de sorte que de l'énergie soit constamment produite pour alimenter le robot.

2. Hydrolienne selon la revendication 1, **caractérisée en ce qu'**un générateur auxiliaire (7) et un moteur (8) sont disposés dans la chaîne de transmission entre la turbine auxiliaire (6) et le robot (5).

3. Hydrolienne selon la revendication 2, **caractérisée en ce qu'**une batterie de charge (10) est montée entre le générateur auxiliaire (7) et le moteur (8).

4. Hydrolienne selon l'une des revendications 1 à 3, **caractérisée en ce que** le robot (5) est retenu par friction ou par engagement positif sur la construction portante (2) ou sur d'autres composants.

5. Hydrolienne selon l'une des revendications 1 à 4, **caractérisée en ce que** la turbine auxiliaire (6) se déplace en même temps que le robot (5).

6. Hydrolienne selon l'une des revendications 2 à 4, **caractérisée en ce qu'**une station de charge (10) est disposée de façon stationnaire et **en ce qu'**une turbine auxiliaire (6) et un générateur (7) sont montés en amont de la station de charge (10).

7. Hydrolienne selon l'une des revendications 1 à 6, **caractérisée en ce que** des mesures sont prises pour permettre d'écarter le robot (5) de la structure portante (2).
